# EUROPEAN PATENT APPLICATION

(11) **EP 4 303 078 A1**
(43) Date of publication of application: **10.01.2024**
(21) Application number: 22183875.8
(22) Date of filing: 08.07.2022
(51) Int. Cl.: B60R 9/055, F16B 5/06

(54) **A LOAD CARRIER AND A METHOD FOR ATTACHING AN ELEMENT TO A LOAD CARRIER**

(71) Applicant: Thule Sweden AB, 335 04 Hillerstorp (SE)
(72) Inventor: LARSSON, Wilhelm, 33155 Värnamo (SE); BERGMAN, Fredrik, 567 92 Vaggeryd (SE)
(74) Representative: Wallentin, Lars

(57) **Abstract**

A load carrier (100) comprising an element (200) and a fastener (300) configured for forming an attachment for securing the element (200) to the load carrier (100), wherein each fastener (300) is configured to be attached to the load carrier (100) in a hidden configuration in relation to the element (200) and the load carrier (100), and wherein the fastener (300) is configured to be attached to the load carrier (100) before the element (200) is attached to the fastener (300) or wherein the fastener (300) is configured to be attached to the element (200) before being attached to the load carrier (100) and a method (1000) for attaching an element (200) to a load carrier (100).

## Description

### TECHNICAL FIELD

The present disclosure relates to load carriers, more specifically to a load carrier comprising an element and a fastener for attaching the element to the load carrier and to a method for attaching an element to a load carrier.

### BACKGROUND OF THE INVENTION

A load carrier, such as a roof box, is a commonly used accessory for vehicles in order to increase the load carrying capacity thereof. A load carrier could be attached to the rear of the vehicle, for instance to a hitch, tow ball or trunk thereof. It may also be secured to a truck bed or, as is most common, be secured to the roof of a vehicle.

Load carriers are becoming increasingly more popular as they enable families and individuals to choose a smaller and possibly more efficient car that suits the everyday needs well, while the load carrier enables the smaller vehicle to carry the luggage needed for instance for longer journeys or vacations.

Typically, when a load carrier is mounted to the roof of a vehicle, it is attached thereto by means of a roof rack which may be attached to fix points on the vehicle or to a rail or similar. The load carrier is usually manufactured from a plastic material by mold forming, however other ways of manufacturing the load carrier are also possible. Usually, the load carrier is formed by a lid and a base portion which are separately formed and connected by means of at least one hinge and most often also by some type of mechanism for facilitating opening and/or closing of the lid.

For manufacturers of load carriers it may be desired to be able to provide the option to allow variations in the aesthetics of the load carrier, which could for instance be achieved by attaching decorations or similar to the load carrier. However, this may add complexities in the manufacturing of the load carrier and it may compromise the integrity of the load carrier for instance in terms of its ability to prevent water from getting into the interior of the load carrier. Moreover, it is desired to facilitate recycling of the load carrier when it has reached its technical lifetime in order to reduce the environmental impact of the load carrier.

### SUMMARY OF THE INVENTION

In view of the above, an object of the present invention is to provide a load carrier that alleviates some of the problems with prior art load carriers. It is further an object of the present invention to provide a way of attaching an element to a load carrier in a simple and time efficient manner. Moreover, it is an object of the present invention to provide a way of attaching an element to a load carrier while reducing the risk of water ingress into the load carrier. Further, it is an object of the present invention to facilitate recycling of a load carrier.

The object is achieved by the subject-matter of the independent claims. Advantageous embodiments may be found in the appended dependent claims and in the accompanying description and drawings.

In a first aspect of the teachings herein is a load carrier comprising an element and a fastener provided, the fastener being configured for forming an attachment for securing the element to the load carrier. Each fastener is configured to be attached to the load carrier in a hidden configuration in relation to the element and the load carrier, and wherein the fastener is configured to be attached to the load carrier before the element is attached to the fastener or wherein the fastener is configured to be attached to the element before being attached to the load carrier. The element may thus be connected to the load carrier by means of the fastener in an easy way, thus facilitating assembly of the load carrier. Moreover, the use of adhesives and similar types of products for fastening the element to the load carrier can be omitted which facilitates recycling of the different components of the load carrier, such as the fastener and the element, as the load carrier can easily be disassembled when it has reached its technical life span. The environmental impact of the load carrier can thus be reduced. Moreover, by providing the load carrier with a fastener according to the first aspect herein allows the element be attached to the load carrier with the fastener in a hidden configuration, thus improving the aesthetic appearance of the load carrier as a whole. The load carrier further allows attachment of the element thereto without using any tools.

The fastener of the load carrier may comprise a base and a stem extending from the base, the base being configured to be arranged in a track of the element and the stem being configured to be resiliently lockingly engaged in an opening in the load carrier. For instance, the stem may form a snap-lock / snap-fit which resiliently engages as the stem is inserted into the opening and thus prevents the stem from being removed. As such, attachment of the fastener to the load carrier is facilitated while the base forms a support for allowing attachment of the element to the fastener.

A plurality of fasteners may be provided in a strip of fasteners, a breakable connection being arranged between the respective bases of two adjacent fasteners. Attachment of the element to the load carrier by means of the fastener is thus further facilitated, as the strip of fasteners allows more fasteners to be handled at once. The breakable connection may be broken once the fastener is attached to the load carrier and/or when the fastener is attached to the element, reducing the amount of time required for assembling the load carrier.

The base of each fastener of the load carrier may be rectangular, thus providing a large engagement area between the fastener and the element. Other shapes are naturally also considered, such as circular, oval etc.

Each fastener of the load carrier may be provided with a protrusion configured to be arranged facing the load carrier, forming a spacing between a side of the fastener facing the load carrier and the load carrier. The protrusion facilitates attachment of the element to the fastener when the fastener is already attached to the load carrier.

The protrusion of the fastener of the load carrier may be formed by a sealing element being arranged around a stem of the fastener thus providing improved resistance to water ingress into the load carrier.

Each breakable connection may be configured to be broken by bending and/or twisting of fasteners adjacent to said breakable connection, thus allowing individual fasteners to be released from the strip without having to use any tools. Further, as the element is preferably resilient and flexible, the breakable connection can be broken when the strip of fasteners is arranged in the element by bending and/or twisting thereof which further facilitates attaching the element to the load carrier.

The strip may comprise between 3 and 10 fasteners, preferably between 4 and 6 fasteners.

A strip of fasteners of the load carrier may be configured to be manufactured in one continuous manufacturing process.

The element of the load carrier may comprise a track arranged on a side of the element configured to be arranged facing the load carrier.

The track may be configured to receive a base of a fastener of a strip.

The element may further comprise an abutment portion extending along the track, the abutment portion being configured to make contact with the load carrier before the track of the element, thus forming a seal against the load carrier.

In a second aspect is a method for attaching an element to a load carrier provided. The method comprising the steps of:
- attaching at least one fastener to the load carrier before attaching the element to the fastener or attaching at least one fastener to the element before attaching the fastener to the load carrier,
- attaching the element to the load carrier via the at least one fastener such that the at least one fastener is hidden between the element and the load carrier. Accordingly, attachment of an element to a load carrier may be facilitated and the use of for instance adhesives be reduced. The assembly of the load carrier is thus facilitated and the components can further be disassembled for instance for recycling without having contaminated the adjacent components could be the case when using adhesives.

The method may further comprise attaching at least one fastener to the load carrier before attaching the element to the load carrier, the method further comprising attaching the element to the at least one fastener on the load carrier by arranging a first lip formed along a track of the element against a second side of a base of the fastener by a sliding movement and by subsequently arranging a second lip formed along the track of the element against the second side of the base of the fastener by resiliently moving the element towards the load carrier. Resiliently moving may comprise a resilient bending of the element along a longitudinal direction thereof, for increasing a space in the track for facilitating insertion of the base of the fastener.

The method may comprise attaching at least one fastener to the element before attaching the fastener to the load carrier, the method further comprising arranging a base of the at least one fastener in a track of the element and subsequently arranging the element such that a stem of the fastener is arranged in a corresponding opening in the load carrier.

### BRIEF DESCRIPTION OF THE DRAWINGS

With reference to the appended drawings, below follows a more detailed description of embodiments of the invention cited as examples.

In the drawings:
Figure 1 discloses a front perspective view of a load carrier comprising at least one fastener and an element.
Figure 2 discloses a front detail view of a load carrier provided with fasteners.
Figure 3 discloses a cross-section view of a load carrier.
Figure 4 discloses a perspective view of an element.
Figure 5 discloses a profile perspective view of an element.
Figure 6 discloses a front view of a fastener.
Figure 7 discloses a perspective view of a fastener.
Figure 8 discloses a bottom view of a strip of fasteners.
Figure 9 discloses a schematic flowchart of a method for attaching an element to a load carrier.

The drawings show diagrammatic exemplifying embodiments of the present invention and are thus not necessarily drawn to scale. It shall be understood that the embodiments shown and described are exemplifying and that the invention is not limited to these embodiments. It shall also be noted that some details in the drawings may be exaggerated in order to better describe and illustrate the invention. Like reference characters refer to like elements throughout the description, unless expressed otherwise.

### DETAILED DESCRIPTION

The teachings herein will now be described more fully hereinafter with reference to the accompanying drawings, in which certain embodiments are shown. Like numbers refer to like elements throughout.

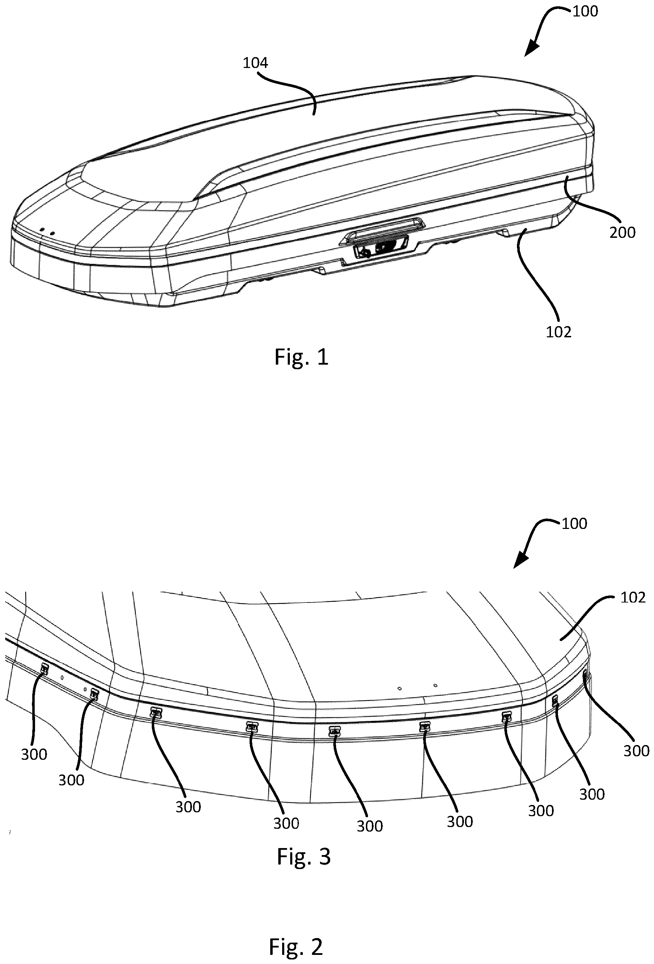

Fig 1 discloses a perspective view of a load carrier 100, specifically a roof box. The teachings herein are described in relation to a roof box which is an ideal application for the present invention. It is however considered that the load carrier 100 could be formed by a rear mounted load carrier as well, i.e. a load carrier that is intended to be mounted on a hitch, trunk or tow ball of a vehicle or in a truck bed of for instance a pickup truck. Further still, the teachings herein are also applicable to for instance roof tents and rear mounted foldable tents.

The load carrier 100 may as is shown in Figure 1 comprise a base 102 and a lid 104, the base 102 being configured to be attached to a support structure of some kind. The support structure is not shown and will not be discussed further in the present disclosure, it may as is realized by a person skilled in the art be formed by a roof rack, a platform or a tow ball/hitch as mentioned. The base 102 may thus also be provided with a dedicated attachment device for attaching it to a tow ball or to a hitch.

The lid 104 is configured to be moved between an open position and a closed position in relation to the base 102 to allow access to the interior of the load carrier 100. Accordingly, the load carrier 100 may be provided with hinges and/or an arrangement such as a lid lifter for facilitating opening/closing of the lid 104. Such items are generally known in the art and will thus not be described further in the present disclosure.

The load carrier 100 further comprises an element 200 which may be releasably attached to the lid 104 thereof. It is however also possible that the element 200 is releasably attached to the base 102 of the load carrier. The element 200 may be formed by an elongate strip of material, which may have elastic and/or resilient properties. The element 200 is preferably formed by a polymeric/plastic material. The element 200 may be formed out of a thermoplastic elastomeric material (TPE) but other materials such as aluminium are also considered. The element 200 may be manufactured by means of extrusion. The element 200 may provide desired aesthetics and/or facilitate hiding certain features such as fasteners, openings or the like and/or provide a seal to reduce the risk of water ingress into the load carrier 100.

Figure 2 discloses a front perspective view of a load carrier 100 illustrating how a plurality of fasteners 300 may be provided along the periphery of the load carrier 100 and/or along the length of the element 200. Each fastener 300 is configured to attach the element 200 to the load carrier 100.

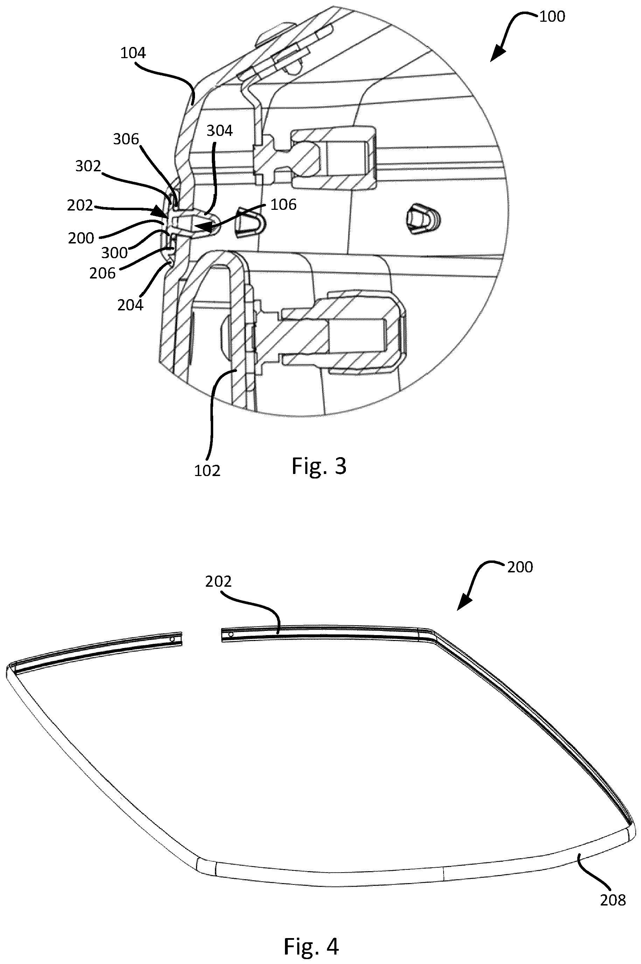

Figure 3 discloses a cross-section detail view of the load carrier 100 in a plane perpendicular to the extension of the element 200. The fastener 300 is configured for forming an attachment for securing the element 200 to the load carrier 100. Each fastener 300 is preferably formed by a polymeric/plastic material such as a Polyoxymethylene (POM) but naturally are other materials also possible.

Each fastener 300 is configured to be attached to the load carrier 100 in a hidden configuration in relation to the element 200 and the load carrier 100. Hidden in the present disclosure is to be interpreted as that the fastener 300 cannot be seen by a user during normal use of the load carrier 100, i.e. when the load carrier 100 is closed. Visible fasteners 300 may in certain applications not be desired on a load carrier 100 in order to meet the high requirements regarding aesthetic appearance that the users has come to expect.

Each fastener 300 may be configured to be attached to the load carrier 100 before the element 200 is attached to the fastener in one embodiment disclosed herein.

In one embodiment disclosed herein, the fastener 300 is configured to be attached to the element 200 before being attached to the load carrier 100.

Each fastener 300 may as is shown in Figure 3 comprise a base 302 and a stem 304 extending from the base 302. The base 302 is configured to be arranged in a track 202 of the element 200. The stem 304 may further be configured to be resiliently lockingly engaged in an opening 106 in the load carrier 100.

The track 202 in the element 200 is preferably configured to be arranged on an interior side 210 of the element 200 being intended to face the load carrier 100.

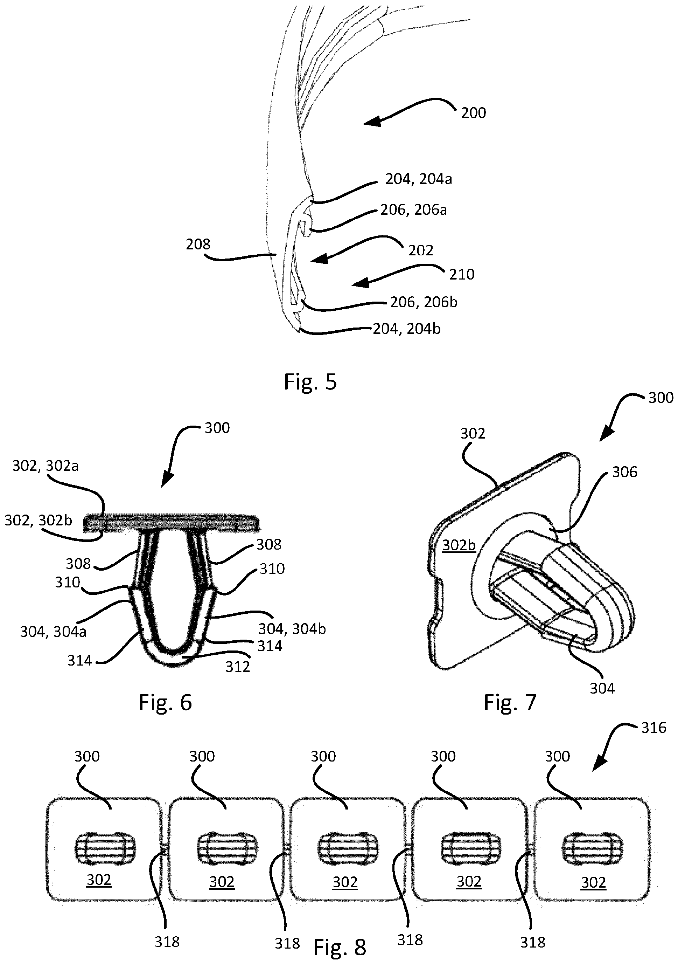

The track 202 may be provided with a lip 206, 206a, 206b extending along the longitudinal direction of the element 200 and being configured to be arranged against a second side 302b (shown in Figure 6) of the base 302 of each fastener 300. The lip 206 facilitating securing the element 200 to the fastener 300 and vice versa.

Figure 4 shows a perspective view of the element 200. As illustrated and mentioned in the foregoing, the element 200 may be an elongate strip of material. The element 200 may be configured to extend around the entire circumference of the load carrier 100 or as is illustrated in Figure 4 extend around a portion of the circumference of the load carrier 100. The element 200 further comprises an exterior surface 208 intended to be facing away from the load carrier 100, i.e. in the opposite direction to the first side 210.

Turning to Figure 5 which shows a profile perspective view of an element 200 in the shape of an elongate strip 200. The track 202 is as mentioned arranged on the interior side 210 of the element 200 facing oppositely in relation to the exterior surface 208. The track 202 forms an elongate structure into which the base 302 of the fastener 300 is intended to be arranged. The cross-sectional shape of the track 202 is thus configured to essentially correspond to the shape of the base 302 of the fastener 300.

Preferably, in the embodiment disclosed herein in which the fastener 300 is configured to be attached to the load carrier 100 before the element 200 is attached to the fastener 300, the element 200 may be configured to be elastically deformed such that the gap between a first lip 206a and a second lip 206b is expanded sufficiently for insertion of the base 302 of the fastener 300. The first and second lip 206a, 206b defining the shape of the track 202. Preferably, the element 200 is configured to be bent around its longitudinal direction to facilitate insertion of the base 302 of the fastener 300.

The element 200 may as mentioned comprise a first lip 206a having an essentially L-shaped cross-section with its free end protruding towards the longitudinal center of the element 200. The element 200 may further comprises a second lip 206b having an essentially L-shaped cross-section with its free end protruding towards the longitudinal center of the element 200 and thus opposite the direction of the protrusion of the free end of the first lip 206a. The first and second lip 206a, 206b are preferably integrally formed with the element 200.

The element 200 may further comprise an abutment portion 204 extending along the track 202. The abutment portion 204 may be configured to abut against the load carrier 100 and may thus form a seal and/or a cover for facilitating hiding the fastener 300 from view for the user. The abutment portion 204 may in one embodiment extend further towards the load carrier 100 than the lip 206, 206a, 206b, thus facilitating that the abutment portion 204 makes contact with the load carrier 100 and applies some amount of pressure thereto for making a seal. Preferably, the abutment portion 204 is flexible such that it may adapt to the shape of the load carrier 100. As illustrated in Figure 5, a first abutment portion 204a and a second abutment portion 204b may be provided at opposite sides of the element 200. The foregoing is thus applicable to both the first and the second abutment portion 204a, 204b.

Figure 6 discloses a front view of a fastener 300. The base 302 of the fastener comprises a first side 302a intended to face away from the load carrier 100 and a second side 302b intended to face towards the load carrier 100.

The stem 304 may comprise a shoulder portion 310, the shoulder portion 310 being configured to form an engagement against the load carrier 100 on an inside of the opening 106, thus preventing unintentional release of the fastener 300 from the load carrier 100. The shoulder portion 310 may be configured to be moved out of engagement with the load carrier 100 for instance by elastically deforming the stem 304, thus allowing removal of the fastener 300. The shoulder portion 310 may be formed by a protrusion and/or ledge forming an engagement surface facing towards the second side 302b of the base 302. The shoulder portion 310 being configured to protrude in an outwardly direction away from the center of the fastener 300 and away from a center of an associated opening 106 in the load carrier 100. The distance between the shoulder portion 310 and the second side 302b of the base 302 of the fastener 300 may essentially correspond to the combined thicknesses of the material of the load carrier 100 and the lip 206 of the element 200. The distance between the shoulder portion 310 and the second side 302b of the base 302 of the fastener 300 may in one embodiment be less than the combined thicknesses of the material of the load carrier 100 and the lip 206 of the element 200, thus providing a pretensioning force to the attachment of the element 200 to the load carrier 100.

The stem 304 may comprise a first leg 304a and a second leg 304b. Each leg 304a, 304b being connected to the base 302, preferably to the second side 302b thereof. Each leg 304a, 304b may be provided with a respective shoulder portion 310. Each leg 304a, 304b may be configured to be elastically deformed towards each other during attachment and/or removal of the fastener 300 to/from the load carrier 100. The first and second leg 304a, 304b may be configured such that one end thereof is fixedly attached to the base 302 and the other end is attached to the other leg 304a, 304b such that the elastic deformation is by bending between the ends of each leg 304a, 304b. Each leg 304a, 304b is configured to strive to elastically return to its original position, whereby the shoulder portion 310 is by the elastic force of the legs 304a, 304b arranged in engagement with the inside of the opening 106 in the load carrier 100. The size and shape of the fastener 300 may naturally be adapted to suit the corresponding size and shape of the opening 106 in the load carrier 100. Preferably however, the fastener 300 is configured for cooperation with a round opening 106 in the load carrier 100 and may thus be provided with a stem 304 having a rounded exterior surface to facilitate cooperation between stem 304 and the opening 106. Correspondingly, the shoulder portion 310 may be formed by a ledge having a rounded extension along the periphery of each leg 304a, 304b, thus increasing the engagement surface around the opening 106 and the locking effect provided by the fastener 300.

The fastener 300 may further be provided with a bridging portion 312 connecting a respective distal end (in relation to the base 302) of the first and second legs 304a, 304b to each other. The bridging portion 312 provides additional strength to the resilience of the first and second leg 304a, 304b, thus improving the locking effect of the shoulder portion 310 and facilitating correct arrangement of the shoulder portion 310 in engagement against the inside of the load carrier 100.

The stem 304 of the fastener 300 may further comprise a proximal portion 308 which may be arranged adjacent to the base 302. The proximal portion 308 is inclined outwards away from the center of the fastener in a proximal-distal direction of the extension of the stem 304 in relation to the base 302. The proximal portion 308 forms a surface which is pushed against the opening 106 in the load carrier 100 by the resilient force of the stem 304, by which the inclination of the proximal portion 308 generates a force in the insertion direction of the fastener 300 facilitating insertion as well as securing of the fastener 300 in the opening 106.

Preferably, the shoulder portion 310 is arranged in a transition between the proximal portion 308 and a distal portion 314, the latter having an inclination which is towards the center of the fastener 300 in a proximal-distal direction of the stem 304.

As illustrated in Figure 6, each leg 304a, 304b may thus have a diverging-converging shape in its respective extension in the distal direction away from the base 102.

In Figure 7 is a fastener 300 shown in a perspective view. As illustrated, the fastener 300 may be provided with a protrusion 306 configured to be arranged facing the load carrier 100 and forming a spacing between the second side 302b of the fastener 300 facing the load carrier 100. The protrusion 306 may thus facilitate attaching the element 200 to the fastener 300 when the fastener 300 is attached to the load carrier 100, as the base 302 of the fastener 300 is arranged at a distance from the load carrier 100 corresponding to the height of the protrusion 306 from the second side 302b of the fastener 300. The protrusion 306 may be integrally formed with the fastener 300. The protrusion 306 may also be separately formed and attached/connected/mated with the fastener 300 in a subsequent step. The protrusion 306 is thus configured to protrude from the surrounding surface of the second side 302b of the base 302 of the fastener 300. The protrusion 306 is illustrated as having a circular shape, but it is to be realized that other shapes are also considered and further that the protrusion does not have to be circularly symmetrical around the stem 304 of the fastener 300. It is also possible that more than one protrusion 306 is provided to the fastener 300. Each protrusion 306 may for instance be formed by a semi-spherical protrusion.

In one embodiment, the protrusion 306 is configured to form a seal between the second side 302b of the base 302 and the load carrier 100. The protrusion 306 may thus be formed from a different material than that of the fastener 300, for instance from a plastic/polymeric material such as rubber or another material suitable for use in sealing applications. The protrusion 306 may be formed by an O-ring 306 as illustrated in Figure 7 having a circular cross-sectional shape. The protrusion 306 may further be provided with other cross-sectional shapes as well, for instance such as a rectangular or oval cross-section.

The protrusion 306 may protrude a distance being equal to or larger than the thickness of the lip 206 of the element 200. The protrusion 306 will thus be in contact with the load carrier 100 even when the element 200 is attached to the fastener 100, for instance for forming a seal around the opening 106 in the load carrier 100.

Figure 8 shows a plurality of fasteners 300 provided in a strip 316 of fasteners 300. A breakable connection 318 being arranged between the respective bases of two adjacent fasteners 300. The breakable connection 318 is configured to be broken for instance by rotating and/or bending and/or pulling and/or by other relative movement between adjacent fastener 300. The breakable connection 318 may be configured to be broken after the base 302 is arranged in the track 202 of the element 200, thus allowing a user to insert a strip 316 of fasteners 300 into the track 202 of the element 200. Moreover, the breakable connection 318 may be broken before or after the fastener 300 is attached to the load carrier 100. Preferably, the strip of fasteners 300 is manufactured in one manufacturing process such as injection molding whereby the breakable connection 316 is formed by the same material as the base 302 of the fastener 300. Each strip 316 may comprise between 3 and 10 fasteners, preferably between 4 and 6 fasteners. Naturally however, the strip 316 may be provided with fewer or more fasteners 300 as well.

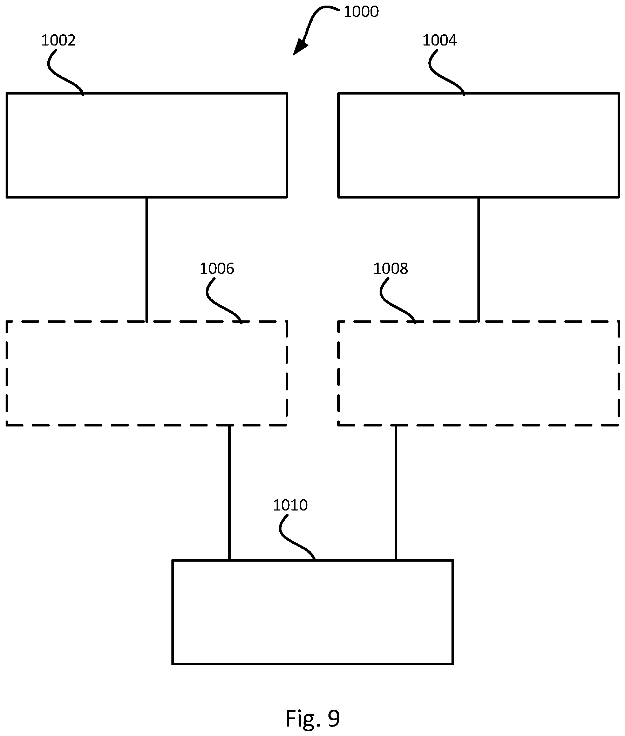

In Figure 9 is a schematic flowchart of a method 1000 for attaching an element 200 to a load carrier 100 shown. The method 1000 may in a first embodiment comprise the steps of:
- attaching 1002 at least one fastener 300 to the load carrier 100,
- attaching 1010 the element 200 to the load carrier 100 via the fastener 300 such that the at least one fastener 300 is hidden between the element 200 and the load carrier 100.

In a second embodiment, the method 1000 may comprise the steps of:
- attaching 1004 at least one fastener 300 to the element 200 before attaching the fastener 300 to the load carrier 100,
- attaching 1010 the element 200 to the load carrier 100 such that the at least one fastener 300 is hidden between the element 200 and the load carrier 100.

Further, in the first embodiment in which the method 1000 comprises attaching at least one fastener 300 to the load carrier 100 before attaching the element 200 to the load carrier 100, the method 1000 further comprises attaching 1006 the element 100 to the at least one fastener on the load carrier by arranging a first lip 206a formed along a track 202 of the element 200 against a second side 302b of a base 302 of the fastener 300 by a sliding movement and by subsequently arranging a second lip 206b formed along the track 200 of the element 200 against the second side 302b of the base 302 of the fastener 300 by resiliently moving the element 200 towards the load carrier 100. The first lip 206a may as is realized by a person skilled in the art be formed by the upper or the lower lip 206 on the element 200. The sliding movement for arranging the first lip 206a against the second side 302b of the fastener 300 is to be interpreted as a movement having at least a portion thereof being essentially in the plane of the extension of the base 302 of the fastener 300. The first lip 206 can thus be slid behind base 302 such that it is arranged against the second side 302b thereof.

The second lip 206b may be arranged against the second side 302b by pivoting the element 200 around the engagement between the first lip 206a and the base 302 of the fastener. The second lip 206b may further be arranged against the second side 302b by bending the element 200 along the longitudinal direction thereof such that the distance/gap between the first lip 206a and the second lip 206b is increased, thus facilitating arranging the second lip 206b against the second side 302b of the base 302. The second lip 206b is preferably resilient such that it flexes as it is arranged against the second side 302b of the fastener 300. In the embodiment disclosed herein in which the fastener 300 is provided with a protrusion 306, the base 302 and the second side 302b of the fastener 300 is spaced apart from the load carrier 100. This further facilitates the arranging of the second lip 206b against the second side 302b of the fastener 300.

In the second embodiment of the method 1000 disclosed herein, in which the method 1000 comprises attaching at least one fastener 300 to the element 200 before attaching the fastener 300 to the load carrier 100, the method 1000 further comprises arranging 1008 the base 302 of the at least one fastener 300 in the track 202 of the element 200 and subsequently arranging the element 200 such that a stem 304 of the fastener 300 is arranged in a corresponding opening 106 in the load carrier 100. The fastener 300 may be arranged in the track 202 by sliding it in the longitudinal direction of the element 200, i.e. in the direction of the extension of the track 200. Naturally however, the base 302 of the fastener 300 may be arranged in the track 202 in other ways as well such as by firstly arranging the first lip 206a against the second side 302b and by subsequently arranging the second lip 206b against the second side 302b of the base 302 of the fastener.

In the embodiment disclosed herein in which a plurality of fasteners 300 are provided in a strip 316 of fasteners 300, the strip 316 may be arranged in its entirety in the track 202 of the element 200. The method 1000 may alternatively comprise detaching the individual fasteners 300 from the strip 316 before arranging 1008 the base 302 of each fastener 300 in the track 202 of the element 200.

It is to be understood that the present invention is not limited to the embodiments described above and illustrated in the drawings; rather, the skilled person will recognize that many changes and modifications may be made within the scope of the appended claims.

## Claims

1. A load carrier (100) comprising an element (200) and a fastener (300) configured for forming an attachment for securing the element (200) to the load carrier (100), wherein each fastener (300) is configured to be attached to the load carrier (100) in a hidden configuration in relation to the element (200) and the load carrier (100), and wherein the fastener (300) is configured to be attached to the load carrier (100) before the element (200) is attached to the fastener (300) or wherein the fastener (300) is configured to be attached to the element (200) before being attached to the load carrier (100).

2. The load carrier (100) according to claim 1, wherein the fastener (300) comprises a base (302) and a stem (304) extending from the base (302), the base (302) being configured to be arranged in a track (202) of the element (200) and the stem (304) being configured to be resiliently lockingly engaged in an opening in the load carrier (100).

3. The load carrier (100) according to claim 1 or 2, wherein a plurality of fasteners (300) are provided in a strip (316) of fasteners, a breakable connection (318) being arranged between the respective bases (302) of two adjacent fasteners (300).

4. The load carrier (100) according to claim 2, wherein the base (302) of each fastener (300) is rectangular.

5. The load carrier (100) according to any one of the preceding claims, wherein each fastener (300) is provided with a protrusion (306) configured to be arranged facing the load carrier (100) forming a spacing between a side (302b) of the fastener (300) facing the load carrier (100) and the load carrier (100).

6. The load carrier (100) according to claim 5, wherein the protrusion (306) is formed by a sealing element (200) being arranged around a stem (304) of the fastener (300).

7. The load carrier (100) according to claim 3, wherein each breakable connection (318) is configured to be broken by bending and/or twisting of fasteners (300) adjacent to said breakable connection (318).

8. The load carrier (100) according to claim 3, wherein the strip (316) comprises between 3 and 10 fasteners (300), preferably between 4 and 6 fasteners (300).

9. The load carrier (100) according to claim 3, wherein a strip (316) of fasteners (300) is configured to be manufactured in one continuous manufacturing process.

10. The load carrier (100) according to any one of the preceding claims, wherein the element (200) comprises a track (202) arranged on a side (210) of the element (200) configured to be arranged facing the load carrier (100).

11. The load carrier (100) according to claim 10, wherein the track (202) is configured to receive a base (302) of the fastener (300).

12. The load carrier (100) according to claim 10 or 11, wherein the element (200) further comprises an abutment portion (204, 204a, 204b) extending along the track (202), the abutment portion (204, 204a, 204b) being configured to make contact with the load carrier (100) before the track (202) of the element (200), thus forming a seal against the load carrier (100).

13. A method (1000) for attaching an element (200) to a load carrier (100), the method comprising the steps of:
- attaching (1002) at least one fastener (300) to the load carrier (100) before attaching the element (200) to the fastener (300) or attaching (1004) at least one fastener (300) to the element (200) before attaching the fastener (300) to the load carrier (100), and
- attaching (1010) the element (200) to the load carrier (100) via the at least one fastener (300) such that the at least one fastener (300) is hidden between the element (200) and the load carrier (100).

14. The method (1000) according to claim 13, wherein the method (1000) comprises attaching (1002) at least one fastener (300) to the load carrier (100) before attaching the element (200) to the load carrier (100), the method (1000) further comprising attaching (1006) the element (200) to the at least one fastener (300) on the load carrier (100) by arranging a first lip (206a) formed along a track (202) of the element (200) against a second side (302b) of a base (302) of the fastener (300) by a sliding movement and by subsequently arranging a second lip (206b) formed along the track (202) of the element (200) against the second side (302b) of the base (302) of the fastener (300) by resiliently moving the element (200) towards the load carrier (100).

15. The method according to claim 13, wherein the method (1000) comprises attaching (1004) at least one fastener (300) to the element (200) before attaching the fastener (300) to the load carrier (100), the method (1000) further comprising arranging (1008) a base (302) of the at least one fastener (300) in a track (202) of the element (200) and subsequently arranging the element (200) such that a stem (304) of the fastener (300) is arranged in a corresponding opening in the load carrier (100).
